# EUROPÄISCHE PATENTSCHRIFT

(11) **EP 2 592 298 B1**
(45) Veröffentlichungstag und Bekanntmachung des Hinweises auf die Patenterteilung: **15.04.2020**
(21) Anmeldenummer: 12401226.1
(22) Anmeldetag: 12.11.2012
(51) Int. Cl.: F16D 59/00

(54) **Werkzeuggerät**
Tool device
Outil

(30) Priorität: 11.11.2011 DE 102011055308
(43) Veröffentlichungstag der Anmeldung: 15.05.2013
(73) Patentinhaber: Lehmann, Franz, 88677 Markdorf (DE)
(72) Erfinder: Lehmann, Franz, 88677 Markdorf (DE); Lehmann, Martin, 77736 Zell am Hamersbach (DE)
(74) Vertreter: Heyerhoff Geiger & Partner Patentanwälte PartGmbB

(56) Entgegenhaltungen:
- EP-A1- 1 348 329
- EP-A1- 2 705 270
- WO-A1-2012/153244
- DE-B3- 10 317 547
- US-A1- 2005 258 012

## Beschreibung

Die Erfindung betrifft ein Werkzeuggerät mit einem Werkzeug, einem Antrieb zum Antreiben des Werkzeugs einem Gerätegehäuse, einer zum Gerätegehäuse zusätzlichen, gehäusefesten Baueinheit, einer mit dem Antrieb verbundenen und in der gehäusefesten Baueinheit gelagerten Welle, einer als Reibbremse mit einem gehäusefesten Reibelement ausgeführten Bremse zum Abbremsen des Werkzeugs, einer mechanischen Steuereinheit zur Steuerung der Bremse, die als Eingangsgröße das Antriebsdrehmoment verwendet und dazu vorbereitet ist, das Antriebsdrehmoment auf mechanischem Wege in eine die Bremse lösende Kraft zu wandeln, und einem Federmittel, das dazu vorbereitet ist, dass es die Bremse bei einem Absinken des Antriebsdrehmoments unter einen Bremsschwellwert in einen Bremszustand drückt. Insbesondere betrifft die Erfindung ein Werkzeuggerät mit einem Antrieb, einem Werkzeug und einem im Antriebskraftfluss zwischen dem Antrieb und dem Werkzeug angeordneten Getriebe, das einen zum Antrieb weisenden Eingang und zumindest einen zum Werkzeug weisenden Ausgang und eine Bremse zum Abbremsen des Ausgangs und damit des Werkzeugs aufweist.

Größere landwirtschaftliche Maschinen und Geräte werden üblicherweise an ein Fahrzeug, beispielsweise einen Traktor, gekoppelt, dessen Motor mit einem Antrieb des landwirtschaftlichen Geräts in der Regel über eine Welle verbunden ist. Durch die Motorkraft des Fahrzeugs wird der Antrieb und damit das Werkzeug eines solchen Anbaugeräts in Bewegung gesetzt. Bei kleineren landwirtschaftlichen Geräten oder Gartengeräten kann der Motor im Gerät integriert sein, sodass ein selbst angetriebenes und selbst fahrendes Gerät zustande kommt oder das Gerät mit der Hand geführt wird.

Zwischen dem Antrieb und dem Werkzeug ist bei manchen Geräten ein Getriebe vorhanden, das die vom Fahrzeug vorgegebene Antriebsdrehzahl auf eine für das Werkzeug geeignete Bewegung umsetzt. Bei Mähmaschinen und Mulchgeräten wird ein bewegtes Messer als Werkzeug eingesetzt. Über das Getriebe wird das Werkzeug in eine schnelle Rotation oder translatorische Bewegung versetzt.

Bei einer starren Verbindung zwischen Werkzeug und Motor wird bei einem Sinken der Motordrehzahl ein negatives Drehmoment auf das Werkzeug übertragen. Der Motor und gegebenenfalls ein Vortrieb werden durch das noch schnell bewegte Werkzeug eine Weile weiter fortgetrieben. In manchen Anwendungen ist eine Entkopplung von Werkzeug und Motor wünschenswert, die durch einen Freilauf realisiert wird. Wird die Motordrehzahl zurückgenommen, so bewegt sich das Werkzeug im Freilauf weiter und läuft langsam aus. Bei schweren Werkzeugen kann dieses Auslaufen eine Minute und länger betragen.

Um das schnell bewegte Werkzeug aus Sicherheitsgründen zügig abbremsen zu können, sind Werkzeugbremsen bekannt, die das drehende Werkzeug bei zurückgenommener Motordrehzahl abbremsen. Komfortablere Bremsen sind hierbei mit einer elektrischen oder hydraulischen Steuerung ausgestattet, die es erlaubt, die Bremse entsprechend einer Bremsanforderung eines Fahrzeugführers zu bremsen. Weist jedoch beispielsweise das antreibende Fahrzeug keine oder keine freie Steuerleitung für die Bremse auf, so kommen einfacherer Bremsen zum Einsatz, bei denen das vom Motor auf das Getriebe aufgebrachte negative Drehmoment verwendet wird, durch das eine Bremsscheibe gegen einen Bremsbelag gedrückt wird. Je stärker das negative Drehmoment ist, desto stärker wird die Bremsscheibe gegen einen Bremsbelag gedrückt und desto stärker ist die Bremskraft, mit der die Bremse das Werkzeug abbremst. Eine solche Bremse ist jedoch nur bei einer starren Verbindung zwischen Motor und Werkzeug einsetzbar, in der bei sinkender Motordrehzahl das negative Drehmoment entsteht.

Aus der DE 10317547 B3 ist ein Werkzeuggerät bekannt, bei dem die Bremskraft durch Federn aufgebracht wird, sodass sie auch bei einem Freilauf eingesetzt werden kann. Das Lösen der Bremse wird durch positives Antriebsdrehmoment beim Anfahren des Werkzeugs erreicht.

Ähnlich ist die Bremse in der WO 2012153244 A1 aufgebaut die erst nach dem vorliegenden Prioritätsdatum veröffentlicht wurde. Das negative Drehmoment des nachlaufenden Werkzeugs wird verwendet, um eine Kurvenscheibe in eine Bremsposition zu bewegen und Federn bewirken das Abbremsen des Werkzeugs.

Es ist eine Aufgabe der vorliegenden Erfindung, ein Werkzeuggerät mit einer verbesserten Bremse anzugeben.

Diese Aufgabe wird durch ein Werkzeuggerät gemäß Anspruch 1 gelöst. Dabei liegt der Bremsschwellwert erfindungsgemäß bei einem positiven Antriebsdrehmoment. Außerdem ist das Reibelement sowohl an der gehäusefesten Baueinheit als auch auf der Welle gelagert. Die Erfindung geht hierbei von der Überlegung aus, dass die Selbsthemmung bei Verwenden des negativen Drehmoments zur Steuerung der Bremse sehr hoch und die Bremskraft sehr stark werden kann. Hierbei werden die in der Bremse aneinander reibenden Gegenelemente mit einer enormen Kraft aufeinander gedrückt. Bei einem erneuten Starten des Werkzeugs müssen diese Elemente wieder voneinander getrennt werden, was unter Umständen einen so großen Kraftaufwand erfordert, dass ein Getriebe, der Antrieb oder sogar das Motorfahrzeug beim Starten beschädigt werden.

Zum Bremsen ist es daher sinnvoll, das Werkzeug vom Motor beziehungsweise vom Antrieb in der Weise zu entkoppeln, so dass kein starkes negatives Drehmoment auftritt. Dies kann durch einen Freilauf erreicht werden. Bei einem Freilauf entsteht jedoch kein ausreichendes negatives Drehmoment, das als Bremskraft verwendet werden könnte.

Zum Bremsen des Werkzeuges wird daher gemäß der Erfindung anstelle des negativen Bremsmoments das Federmittel eingesetzt, das die Bremse in den Bremszustand drückt. Als Steuerkraft kann das Antriebsdrehmoment dienen. Sinkt das positive Antriebsdrehmoment auf das Werkzeug unter den Bremsschwellwert ab, so wirkt das Federmittel und drückt die Bremse in ihren Bremszustand, sodass das Werkzeug abgebremst wird. Das Federmittel wirkt hierbei zweckmäßigerweise selbsttätig, so dass auf andere Steuermechanismen oder Steuerkräfte verzichtet werden kann. Die Druckkraft des Federmittels ist begrenzt eingestellt, sodass ein zu starkes Aufeinanderpressen der Gegenelemente in der Bremse zuverlässig vermieden wird. Ein erneutes Starten des Werkzeugs ist somit problemlos und ohne zu erwartende Schäden möglich.

Die Erfindung nutzt hierbei zweckmäßigerweise eine mechanische Steuereinheit zur Steuerung der Bremse, die als Eingangsgröße das Antriebsdrehmoment verwendet. Das Antriebsdrehmoment kann so auf mechanischem Wege als ein die Bremskraft einstellender Parameter verwendet werden, so dass eine zusätzliche elektrische, hydraulische oder externe mechanische Steuerung nicht notwendig ist. Analog wie bei selbst hemmenden Bremsen wird das vorliegende Antriebsdrehmoment als die Bremse lösende Kraft verwendet. Die mechanische Steuereinheit ist also dazu vorbereitet, das Antriebsdrehmoment auf mechanischem Wege in eine die Bremse lösende Kraft zu wandeln. Als die Bremse schließende Kraft wird jedoch die Federkraft des Federmittels verwendet. Entsprechend ist die mechanische Steuereinheit dazu vorbereitet, die Federkraft auf mechanischem Wege in eine die Bremse schließende Kraft zu wandeln. Das Antriebsdrehmoment und die Federkraft wirken hierbei in der mechanischen Steuereinheit gegeneinander.

Wenn ein Getriebe vorhanden ist, kann die mechanische Steuereinheit zweckmäßigerweise vollständig innerhalb des Getriebes, also in einem Getriebegehäuse, angeordnet sein. Auf diese Weise kann auf einen Steueraktuator, z.B. ein Gestänge, ein Bowdenzug oder dergleichen, verzichtet werden, so dass das Getriebe als abgeschlossene Einheit aufgebaut werden kann. Da die mechanische Steuereinheit nicht von einem Bediener gesteuert wird, ist das Getriebe außerdem nicht anfällig für Fehlbedienung. Selbstverständlich ist es auch möglich, die Bremse als vom Getriebe separate Einheit aufzubauen und z.B. mit einem eigenen Gehäuse zu versehen.

Besonders geeignet ist die Erfindung in der Anwendung bei landwirtschaftlichen Geräten, wie Mähmaschinen, Mulchgeräten, Erntemaschinen, Häcksler, Kreissägen und dergleichen, da bei diesen ein hohes Interesse daran besteht, das bewegte Werkzeug zuverlässig abbremsen zu können. Aber auch bei Gartengeräten, wie Rasenmähern, Laubsaugern, Hächslern, Mulchern oder Kehrern, oder bei kommunalen Geräten, Geräten zur Bodenbearbeitung oder Werkzeugmaschinen ist die Erfindung vorteilhaft.

Das Werkzeuggerät kann ein selbst angetriebenes Gerät mit einem Motor sein, der in diesem Fall als Antrieb bezeichnet wird, oder ein Zusatzgerät zu einem Geräteträger mit einem Motorantrieb sein, wie einem landwirtschaftlichen Fahrzeug, beispielsweise einem Traktor, einem Unimog oder einer anderen landwirtschaftlichen Maschine. In diesem Fall ist der Antrieb üblicherweise als Welle ausgebildet, wobei jedoch auch andere Antriebsformen denkbar sind. Bei einem vorhandenen Getriebe weist dieses einen Eingang und einen Ausgang auf, wobei der Antriebskraftfluss bei positivem Drehmoment vom Antrieb über den Eingang zum Ausgang bis zum Werkzeug verläuft.

Das Federmittel enthält ein oder mehrere Federn, die zweckmä-ßigerweise in der Art vorgespannt sind, dass sie durch ihre Entspannung die Bremse in den Bremszustand drücken. Vorteilhafterweise ist die Bremse derart gebildet, dass ihre Bremskraft ausschließlich durch das Federmittel erzeugt wird. Hierdurch wird die Bremskraft stets kontrolliert und ein unerwünschtes Blockieren der Bremse kann vermieden werden.

Durch den Bremsschwellwert im Bereich des positiven Antriebsdrehmoments wird das Werkzeug zweckmäßigerweise bereits dann abgebremst, wenn es nur noch mit einem sehr schwachen Drehmoment angetrieben wird. Prinzipiell könnte der Bremsschwellwert zwar 0 sein, ein Bremsschwellwert bei einem positiven Antriebsdrehmoment hat demgegenüber jedoch den Vorteil, dass die Bremsung auch dann zuverlässig eingeleitet wird, wenn der Bremsschwellwert sich während des Gebrauchs des Werkzeugs unbeabsichtigterweise etwas verändert. Außerdem kann der positive Bremsschwellwert dazu verwendet werden, dass das positive Antriebsdrehmoment und die Kraft des Federmittels als Gegenspieler verwendet werden können. Hierdurch kann die Bremse relativ einfach konstruiert werden.

Das positive Antriebsdrehmoment kann außerdem zum Lösen der Bremse verwendet werden, indem es der Federkraft entgegenwirkt. Dies kann mit einer geeigneten mechanischen Steuereinheit erreicht werden, der das Antriebsdrehmoment in eine die Federkraft aufhebende Kraft umwandelt.

Hierzu umfasst die Bremse zweckmäßigerweise ein Freigabemittel, das dazu vorbereitet ist, die Bremse bei einem positiven Antriebsdrehmoment oberhalb eines Freigabeschwellwerts in einen Freigabezustand zu drücken. Das Freigabemittel verwandelt das positive Antriebsdrehmoment zweckmäßigerweise in eine Kraft, die der Federkraft des Federmittels entgegenwirkt, wodurch die Bremse gelöst wird. Der Freigabeschwellwert kann hierbei bei einem anderen positiven Antriebsdrehmoment liegen als der Bremsschwellwert, in der Regel wird der Freigabeschwellwert höher liegen, also bei einem größeren positiven Antriebsdrehmoment. Entsprechend liegt zwischen diesen beiden Schwellwerten ein Drehmomentbereich, in dem die Kräfte des Freigabemittels und des Federmittels in der Weise gegeneinander wirken, dass die resultierende Kraft geringer ist als eine Trägheit der Bremse, sodass eine Hysterese im Antriebsdrehmomentbereich entsteht. Durch diese Hysterese kann ein Flattern der Bremse vermieden werden.

Weiter ist es vorteilhaft, wenn eine starre Kraftverbindung vom Werkzeug bis zum Antrieb vermieden wird. Zum Unterbrechen des Kraftverlaufs kann ein Freilauf verwendet werden. Der Freilauf gibt das Werkzeug bei einem negativen Antriebsdrehmoment oberhalb eines Freilaufsschwellwerts frei und lässt zweckmäßigerweise eine freie Rotation des Werkzeugs gegenüber dem Antrieb zu, so dass das Werkzeug schneller drehen kann, als der Antrieb es bei einer starren Verbindung antreiben würde. Es kann vermieden werden, dass das Werkzeug den Antrieb mitzieht und eine ungewünschte Rückkopplung zum Antrieb erzeugt. Bei einem Freilauf kann das Werkzeug kein erhebliches negatives Drehmoment erzeugen, dass für eine Bremsung verwendbar wäre. Auch von daher ist es vorteilhaft, wenn das Werkzeug bereits bei einem positiven Antriebsdrehmoment abgebremst wird. Der Freilauf kann in einem Getriebegehäuse angeordnet und/oder Bestandteil der Bremse sein. Zweckmäßigerweise ist eine Freilaufeinheit innerhalb der Bremse angeordnet.

In einer vorteilhaften Ausführungsform der Erfindung umfasst das Freigabemittel einen Abdrücker und ein Gegenelement mit einer Schrägfläche, wobei diese beiden Elemente so zueinander angeordnet sind, dass der Abdrücker bei einem ansteigenden positiven Drehmoment an der Schrägfläche entlang läuft und einen Freigabedruck zum Lösen der Bremse aufbaut. Auf diese Weise kann das positive Drehmoment mechanisch besonders einfach in den Freigabedruck zum Lösen der Bremse umgewandelt werden. Das Laufen kann ein Gleiten oder Rollen sein.

Zweckmäßigerweise ist oder umfasst das Gegenelement mit der Schrägfläche eine Kurvenscheibe mit mehreren Schrägflächen, die um eine Drehachse des Antriebs angeordnet sind. Da der Antrieb üblicherweise drehend erfolgt, kann diese Drehbewegung besonders einfach und verkantungsfrei in den Freigabedruck mechanisch umgewandelt werden.

Weiter ist es vorteilhaft, wenn der Abdrücker ebenfalls eine Schrägfläche aufweist, an der dem Bauelement zum Freigeben der Bremse entlang gleitet. Die Kraft zwischen Abdrücker und Bauelement kann so auf mehrere Flächen verteilt werden.

Eine symmetrische Kraftwirkung der beiden Bauteile aufeinander kann erreicht werden, wenn der Abdrücker und das Gegenelement einander zugewandte, identische Kurvenflächen aufweisen. Zudem kann eine Fertigung vereinfacht werden, insbesondere, wenn Bauelement und Abdrücker zwei identische Teile sind.

Während des Betriebs des Werkzeugs wirken in der Bremse zwei Kräfte gegeneinander: Die Federn drücken die Bremse in Schließrichtung und das positive Antriebsdrehmoment drückt die Bremse in Öffnungsrichtung. Hierbei kann es vorkommen, dass auch bei schnell laufendem Werkzeug das positive Antriebsdrehmoment klein ist, z.B. bei frei laufendem Werkzeug, und unter den Bremsschwellwert fällt. Die Bremse fängt an, leicht zu bremsen und die Werkzeugdrehzahl fällt ab. Die Drehzahl wird jedoch vom Antrieb reguliert, der mit einem wachsenden Antriebsdrehmoment gegensteuert, so dass das Antriebsdrehmoment über den Bremsschwellwert steigt und die Bremswirkung endet. Es entsteht so ein ungewünschtes Rattern.

Diesem Rattern kann entgegengewirkt werden, wenn der Bremsschwellwert abgesenkt wird, also die Drehmomentgrenze, unterhalb derer das Bremsen beginnt, abgesenkt wird. Der Bremsschwellwert kann durch schwächere Bremsfedern oder eine geringere Schrägenneigung der Schrägfläche abgesenkt werden. Das führt jedoch bei einfachen Bremskonstruktionen dazu, dass die Bremskraft in unerwünschter Weise verringert wird. Dies kann wiederum dadurch ausgeglichen werden, dass der Winkel der Bremsfläche gegen die Axialrichtung flacher bzw. spitzer gewählt wird, so dass die Bremswirkung bei gleichem Anpressdruck der Gegenelemente aufeinander stärker wird.

Dieses Problem kann dadurch gelöst werden, dass die Bremse derart beschaffen ist, dass der Bremsschwellwert am Lösepunkt der Bremse größer ist, als an einem Betriebspunkt, an dem die Bremse geöffnet ist, zweckmäßigerweise zumindest 1,5-fach größer, insbesondere zumindest 2-fach und weitere insbesondere zumindest 4-fach größer. Am Lösepunkt der Bremse, der auch der Schließpunkt ist, an dem sich z.B. Bremsbacken gerade berühren, kann daher eine hohe Bremskraft erhalten bleiben, und am Betriebspunkt, an dem die Bremse zweckmäßigerweise zumindest 1 mm geöffnet ist, insbesondere zumindest 3 mm, kann ein Rattern vermieden werden.

Der Bremsschwellwert kann durch die Neigung der Schrägfläche eingestellt werden, an der der Abdrücker entlang gleitet. Entsprechend weist die Schrägfläche vorteilhafterweise zumindest zwei Segmente unterschiedlicher Schrägenneigung auf. Hierbei dient eines der Segmente zweckmäßigerweise als Steuerfläche am Lösepunkt der Bremse und das andere Segment als Steuerfläche an einem Betriebspunkt, an dem die Bremse geöffnet ist, zweckmäßigerweise an einem Betriebspunkt eines regulär vorgesehenen Dauerbetriebs.

Vorteilhafterweise ist die Schrägenneigung der Steuerfläche am Lösepunkt größer als am Betriebspunkt. Mit gleichem Vorteil weist das obere Segment eine geringere Schrägenneigung auf, als das untere Segment. Die Ortsangabe oben und unten bezieht sich hierbei auf Vertiefungen bzw. Ausformung im Abdrücker bzw. dem Bauelement, an dem der Abdrücker entlang gleitet. Ein Übergang zwischen den beiden Schrägenneigungen kann abrupt oder kontinuierlich, also mit einem weichen Übergang, ausgeführt sein.

Um ein Rattern zuverlässig zu vermeiden, ist es vorteilhaft, wenn das obere Segment so angeordnet ist, dass die Bremse bei einem Rutschen des Abdrückers auf jedwedem Bereich des oberen Segments geöffnet ist.

Welchen Schrägenwinkel die Schrägfläche insgesamt oder die beiden Segmente haben, ist von mehreren Parametern abhängig. Nach unten hin, also zu kleinen Winkeln hin, besteht eine Grenze insofern, als dass das Schließen der Bremse stets gewährleistet sein muss. Bei zu kleinem Winkel kann die Haftreibung des Abdrückelements auf der Steuerfläche bzw. Schrägfläche nicht überwunden werden und die Bremse schließt nicht mehr. Die untere Winkelgrenze ist somit abhängig von der Haftreibung, jedoch auch von der Federstärke, denn je größer diese ist, desto flacher kann der Winkel sein.

Die obere Grenze des Winkels sollte so liegen, dass die Bremse am Betriebspunkt, also bei geöffneter Bremse, und bei konstanter Betriebsgeschwindigkeit des Antriebs nicht in die Bremsstellung gedrückt wird. Der Bremsschwellwert sollte also unter dem Betriebsdrehmoment liegen. Das Betriebsdrehmoment ist abhängig vom Arbeitswiderstand des Werkzeugs, also dem Widerstand, der bei konstanter Betriebsdrehzahl das positive Antriebsdrehmoment durch die Bremse erzeugt. Der Bremsschwellwert ist auch abhängig von der Federkraft, die die Bremse in Schließrichtung drückt. Bei großer Federkraft muss der Winkel flach werden, damit der Bremsschwellwert unter dem Betriebsdrehmoment liegt. Es ist also eine kleine Federkraft vorteilhaft, um einen größeren Schrägenwinkel zu erlauben.

Die Federkraft, also die Schließkraft, bestimmt daher maßgeblich den Schrägenwinkel: Je kleiner die Federkraft ist, desto steiler bzw. größer muss die Untergrenze des Schrägenwinkels sein, und umso steiler bzw. größer kann die Obergrenze des Schrägenwinkels sein.

Die notwendige Federkraft ist abhängig von der Masse des Werkzeugs - je größer die Masse, desto größer muss die Bremswirkung und somit die Federkraft sein. Um auch bei schwerem Werkzeug eine kleine Federkraft zu erlauben, kann die Bremswirkung durch die Anordnung der Gegenelemente, insbesondere den Neigungswinkel des Gegenelements zur Axialrichtung, beeinflusst werden. Doch abgesehen davon sind die Federstärke und die Schrägenneigung unmittelbar miteinander gekoppelt.

Eine besonders sicheres Abbremsen des Werkzeugs kann erreicht werden, wenn Federkraft, Schrägenwinkel, Schrägenwinkel und Arbeitswiderstand des Werkzeugs so aufeinander abgestimmt sind, dass die Bremse bei verschwindendem Antriebsdrehmoment D = 0 schließt. Der Bremsschwellwert liegt dann bei einem positiven Antriebsdrehmoment.

Um ein Rattern zuverlässig zu vermeiden, ist es vorteilhaft, die Schrägenneigung im Betriebspunkt der Bremse klein zu halten. Das geht nur bei kleiner Haftreibung. Daher sind Abdrücker und Schrägfläche zumindest im Bereich des Betriebspunkts aus einem Material mit einer geringen Haftreibung gefertigt. Der Reibungskoeffizient liegt zweckmäßigerweise unter 0,1, insbesondere unter 0,065, weiter insbesondere unter 0,05.

Konkrete vorteilhafte Werte für Schrägenwinkel liegen zwischen 2° und 5° bei einem Reibungskoeffizienten unter 0,1, insbesondere für das obere Segment, und zwischen 5° und 7° bei einem Reibungskoeffizienten über 0,1, insbesondere für das obere Segment. Insbesondere für das untere Segment sind Schrägenwinkel zwischen 5° und 14° vorteilhaft, bei durchgehender Schrägfläche zwischen 5° und 9°.

Im Speziellen hängt die geeignete Schrägenneigung vom Arbeitswiderstand des Werkzeugs ab. Bei großem Arbeitswiderstand ist das Antriebsdrehmoment für den regulären Betrieb hoch, so dass die Bremse offen bleibt bzw. der Bremsschwellwert hoch sein kann. Entsprechend kann die obere Schräge stärker geneigt sein, als bei einem Werkzeug mit einem geringeren Arbeitswiderstand.

Eine weitere vorteilhafte Ausführungsform der Erfindung sieht vor, dass die Bremse eine Reibbremse mit zwei Reibelementen zum bremsenden Reiben gegeneinander ist. Zweckmäßigerweise sind diese Reibelemente beide um eine Achse des Antriebseingangs und relativ zu dieser Achse verdrehbar angeordnet. Hierdurch kann eine Kombination von Bremse und Freilauf besonders einfach und kostengünstig realisiert werden. Weiter ist es vorteilhaft, wenn ein ausgangsseitiges Reibelement verdrehfest mit dem Ausgang beziehungsweise dem Werkzeug verbunden ist. Das andere Reibelement kann gehäusefest angeordnet sein.

Das ausgangsseitige Reibelement ist zweckmäßigerweise nicht rotationssteif mit dem Eingang angeordnet, sondern es ist zweckmäßigerweise ein Freilauf zwischen dem Eingang und dem ausgangsseitigen Reibelement angeordnet. Eine kompakte Bauweise wird erreicht, wenn das werkzeugseitige Reibelement um die Achse des Antriebs oder Getriebeeingangs angeordnet und relativ zu dieser Achse verdrehbar ist.

Insbesondere in dem Fall, in dem die Bremskraft nur vom Federmittel aufgebracht wird, ist es vorteilhaft, wenn die beiden Reibelemente bei einem Bremsvorgang in der Weise gegeneinander gedrückt werden, dass deren Bremsflächen schräg zu einer Andrückrichtung, mit denen die beiden Bremsflächen aufeinander gedrückt werden, ausgerichtet sind. Die Druckkraft der beiden Bremsflächen aufeinander kann hierbei gegenüber der senkrechten Ausrichtung der Bremsfläche zur Andrückrichtung erhöht werden, ohne dass die Federkraft vergrößert werden muss. Besonders vorteilhaft ist die konische Anordnung der Reibflächen.

In einer weiteren vorteilhaften Ausführungsform der Erfindung sind die Bremsflächen um einen Winkel zwischen 10° und 80° zu derjenigen Axialrichtung geneigt, die der Eingang im Bereich der Bremse aufweist. Besonders geeignet ist ein Bereich zwischen 15° und 30°. Der Eingang, zweckmäßigerweise eine Welle, weist eine Axialrichtung auf, parallel zu der die Andrückrichtung besonders vorteilhaft ausgerichtet ist. Durch den Winkel zwischen 10° und 80° wird eine Schräge der Bremsflächen zu der Axialrichtung und damit eine Bremskraftverstärkung erreicht.

Gerade bei einer solchen Konstruktion, bei der das positive Antriebsdrehmoment einer Federkraft entgegenwirkt, ist es sinnvoll, wenn die gegen die Federkraft wirkende Lösekraft auf ein Maximum begrenzt wird. Hierdurch können die beteiligten Komponenten mechanisch geschont werden. Dies kann in besonders einfacher Weise erreicht werden, wenn das Freigabemittel ein Mitnahmemittel aufweist, das bei Erreichen eines positiven Antriebsdrehmoments oberhalb eines Mitnahmeschwellwerts einen rutschfreien Kraftschluss im Antriebsstrang erzeugt. Dieser rutschfreie Kraftschluss kann besonders einfach durch die Anlage zweier Flächen aneinander erzeugt werden, die unterhalb des Mitnahmeschwellwerts voneinander beabstandet sind.

Mit gleichem Vorteil wird auch die vom Freigabemittel erzeugte axiale Anpresskraft gegen das Federmittel nach oben begrenzt. Auch dies kann durch ein Mitnahmemittel mit zwei aneinander anliegenden Flächen erreicht werden.

Um eine zuverlässige und kräftige Bremsung zu erreichen sollten die beiden Bremsflächen der Bremse in einer definierten Ausrichtung zueinander gehalten werden. Hierfür ist es vorteilhaft, wenn die die Bremsflächen tragenden Reibelemente ausschließlich über Präzisionselemente miteinander verbunden sind, so dass die definierte Ausrichtung zueinander zuverlässig eingehalten wird. Als Präzisionsteile können solche Teile verstanden werden, bei denen eine Toleranz in der Ausrichtung der Bremsflächen zueinander weniger als 1 mm, insbesondere weniger als 0,5 mm beträgt.

Dies wird dadurch erreicht, dass das Werkzeuggerät ein Gerätegehäuse, eine gehäusefeste Baueinheit und eine mit dem Antrieb verbundene und in der gehäusefesten Baueinheit gelagerte Welle aufweist, wobei die Bremse eine Reibbremse mit einem gehäusefesten Reibelement ist, das insbesondere unmittelbar an der gehäusefesten Baueinheit gelagert ist. Hierdurch kann vermieden werden, dass das gehäusefeste Reibelement über das Gerätegehäuse zu dem rotierbaren Reibelement ausgerichtet ist, da die Lagetoleranz bei einer Ausrichtung über das Gerätegehäuse zu ungenau ist. Die gehäusefeste Baueinheit kann somit als Ausrichtmittel zum exakten Ausrichten beider Reibelemente verwendet werden.

Die gehäusefeste Baueinheit und das Gerätegehäuse sind verschiedene Einheiten. Zweckmäßigerweise ist das gehäusefeste Reibelement auf der Welle gelagert, entweder unmittelbar oder mittelbar über die gerätegehäusefreie Baueinheit. Es ist also gehäusefrei auf der Welle gelagert. Vorteilhafterweise ist auch das rotierbare Reibelement auf der Welle gelagert. Allgemein sind beide Reibelemente an der gleichen gehäusefreien Baueinheit gelagert.

Ebenfalls einer exakten Ausrichtung der beiden Reibelemente zueinander ist es förderlich, wenn die Bremse eine Reibbremse mit einem gehäusefesten Reibelement ist, das um einen Kraftfluss vom Antrieb zum Werkzeug herum angeordnet ist.

Eine weitere vorteilhafte Ausführungsform der Erfindung sieht vor, dass das Werkzeuggerät ein Bremsengehäuse aufweist, das die Bremse umschließt. Es kann vermieden werden, dass staubige und schmutzige Arbeitsbedingungen die Funktion der Bremse beeinträchtigen. Außerdem kann es vorkommen, dass ein Defekt der Bremse eine Überhitzung der Bauteile erzeugt und überhitzte Bauteile der Bremse Schmutz und Staub entzünden. Hierbei besteht nicht nur das Problem, dass das Werkzeuggerät abbrennt. In der Landschaftspflege ist die Brandgefahr sehr hoch, da oft mit dürrem Gras, Gestrüpp, Holz, Heustaub und anderen leicht entflammbaren Materialien gearbeitet wird.

Vorteilhafterweise ist das Bremsengehäuse ein geschlossenes und abgedichtetes Gehäuse, insbesondere mit einer Ölfüllung. Hierdurch kann eine Brandgefahr weiter verringert werden.

Das Federmittel kann mehrere Federelemente, z.B. Bremsfedern, aufweisen. Möglich ist auch nur ein einziges, zentral angeordnetes Federelement.

Bei einem Bremsvorgang wird Reibungswärme erzeugt, die sich auf das Federmittel übertragen kann. Übersteigt die übertragene Wärme einen kritischen Temperaturwert, so kann das Federmittel so heiß werden, so dass es sich setzt und seine Federkraft abnimmt. Um dies zu verhindern, ist es vorteilhaft, wenn das Federmittel in zumindest einem Federlager im Gegenelement so weit entfernt von der Bremsfläche gelagert ist, dass die Temperatur der Federlager bei einer maximal zugelassenen Bremsung des Werkzeugs eine Maximaltemperatur nicht übersteigt, die zweckmäßigerweise innerhalb der Temperaturbeständigkeitsgrenzen für die Federn liegt und vorteilhafterweise bei 180°C, insbesondere bei 100°C, liegt.

Weiter wird vorgeschlagen, dass das Federmittel mehrere Bremsfedern aufweist, die in einem Tellerrad des Getriebes gelagert sind. Hierdurch kann eine kompakte Anordnung des Federmittels erreicht werden.

Außerdem ist die Erfindung gerichtet auf einen Satz aus mehreren Werkzeuggeräten, insbesondere wie oben beschriebene Werkzeuggeräte. Die Werkzeuggeräte sind zweckmäßigerweise zum Betrieb unterschiedlicher Werkzeuge vorbereitet.

Es wird vorgeschlagen, dass der Bremsschwellwert der einzelnen Werkzeuggeräte verschieden ist. Dies kann durch verschiedene Schrägenneigungen des oberen Segments erreicht werden. So hat jedes Werkzeuggerät gegenüber den anderen Werkzeuggeräten des Satzes einen anderen Bremsschwellwert bzw. eine andere Schrägenneigung.

Zweckmäßigerweise steht der Bremsschwellwert bzw. die Schrägenneigung in Abhängigkeit zum regulären Arbeitswiderstand des Werkzeugs des betreffenden Werkzeuggeräts. Hierbei ist die Schrägenneigung bei einem Werkzeug mit einem höheren Arbeitswiderstand größer als bei einem Werkzeug mit kleinerem Arbeitswiderstand.

Außerdem ist die Erfindung gerichtet auf eine Getriebeeinheit für ein Werkzeuggerät mit einem Getriebeeingang, einem Getriebeausgang und einer zwischen Getriebeeingang und Getriebeausgang angeordneten Bremse. Erfindungsgemäß weist das Getriebe ein Getriebegehäuse auf, das die Bremse umschließt. Das Getriebegehäuse kann ein Bremsgehäuse sein. Getriebe und Bremse bilden so eine Baueinheit.

Zweckmäßigerweise ist die Getriebeeinheit derart ausgeführt, dass es für ein wie oben beschriebenes Werkzeuggerät einsetzbar ist. Es enthält hierfür eine Bremse zum Abbremsen seines Ausgangs und damit des Werkzeugs. Die Bremse ist mit einem Federmittel ausgestattet, das dazu vorbereitet ist, die Bremse bei einem positiven Antriebsdrehmoment unterhalb eines Bremsschwellwerts in einen Bremszustand zu drücken.

Ausführungsformen zu der auf die Getriebeeinheit gerichteten Erfindung sind oben zum Werkzeuggerät und in der Figurenbeschreibung beschrieben.

Ferner ist die Erfindung gerichtet auf ein Verfahren zum Abbremsen eines rotierenden Werkzeugs eines Werkzeuggeräts, das ein Gerätegehäuse, eine gehäusefeste Baueinheit und eine als Reibbremse mit einem gehäusefesten Reibelement ausgeführten Bremse aufweist, bei dem das Werkzeug von einem Antrieb über eine an der gehäusefesten Baueinheit gelagerte Welle mit positivem Antriebsdrehmoment angetrieben und bei einem Absinken des Antriebsdrehmoments abgebremst wird, wobei eine mechanische Steuereinheit zur Steuerung der Bremse als Eingangsgröße das Antriebsdrehmoment verwendet und das Antriebsdrehmoment auf mechanischem Wege in eine die Bremse lösende Kraft wandelt, und wobei die Bremse ein Federmittel enthält, das die Bremse bei einem Absinken des Antriebsdrehmoments unter einen Bremsschwellwert selbsttätig in einen Bremszustand drückt.

Es wird vorgeschlagen, dass der Bremsschwellwert erfindungsgemäß bei einem positiven Antriebsdrehmoment liegt und das Reibelement sowohl an der gehäusefesten Baueinheit als auch auf der Welle gelagert ist. Vorteile und Details sind oben zum Werkzeuggerät und in der Figurenbeschreibung ausgeführt.
- Figur 8: einen Abdrücker in perspektivischer Ansicht,
- Figur 9: den Abdrücker in einer Draufsicht,
- Figur 10: den Abdrücker in einer Seitenansicht,
- Figur 11: eine Bremse und ein Winkelgetriebe in zwei voneinander getrennten Baugruppen und
- Figur 12: die vom Getriebe getrennte Bremse in einer Schnittdarstellung.

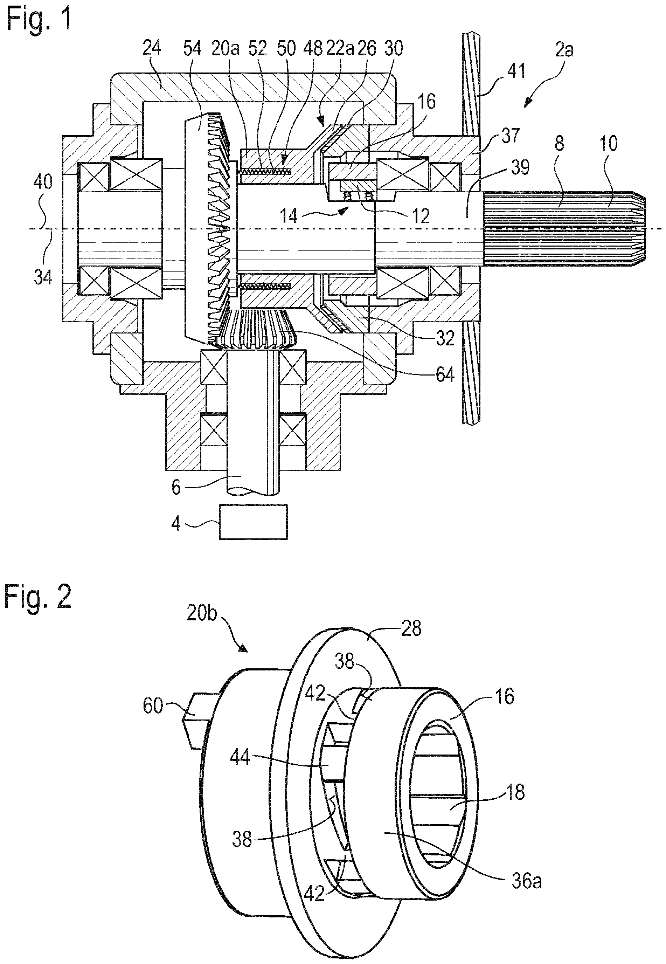

Figur 1 zeigt ein Getriebe 2a für ein landwirtschaftliches Gerät mit einem Werkzeug 4, das in Figur 1 nur schematisch an einem Ausgang 6 des Getriebes 2a angedeutet ist. Auf die Darstellung weiterer Einzelheiten des landwirtschaftlichen Geräts, wie Räder, ein Rahmen oder ein Gehäuse wurde verzichtet. Das landwirtschaftliche Gerät ist dazu vorgesehen, an ein Zugfahrzeug angespannt zu werden, beispielsweise einen Traktor, und es weist hierzu einen Antrieb 8 in Form einer Antriebswelle auf, die mit dem Zugfahrzeug beziehungsweise dessen Abtrieb zu verbinden ist. Das landwirtschaftliche Gerät weist in diesem Ausführungsbeispiel keinen eigenen Motor auf, sondern ist auf einen Motor im Zugfahrzeug angewiesen.

Der Antrieb 8 des landwirtschaftlichen Geräts ist gleichzeitig der Eingang 10 des Getriebes 2a. Der Antriebskraftfluss verläuft über den Antrieb 8 über das Getriebe 2a und dessen Ausgang 6 zum Werkzeug 4. Detailliert verläuft der Kraftfluss vom Antrieb 8 beziehungsweise Eingang 10 über eine Ratsche 12 eines Freilaufs 14 in eine mechanische Steuereinheit mit einer Buchse 16, die in Figur 2 ausführlicher gezeigt ist. Die Buchse 16 ist in ihrem Inneren hierbei so mit entsprechenden Ausnehmungen 18 ausgeführt, dass die auf der Antriebswelle laufende Ratsche 12 bei einem Antrieb durch ein positives Drehmoment den Kraftschluss formschlüssig herstellt und bei einem negativen Drehmoment ein Freilaufen der Antriebswelle 10 innerhalb der Buchse 16 gewährleistet. Der Freilauf kann auch außerhalb des Getriebes 2a angeordnet sein.

Von der Buchse 16 verläuft der Kraftfluss weiter auf ein Gegenelement 20a einer Bremse 22a, die innerhalb des Getriebegehäuses 24 des Getriebes 2a angeordnet ist. Ein alternatives Gegenelement 20b ist in Figur 2 dargestellt. Die beiden Gegenelemente 20a, 20b aus den Figuren 1 und 2 sind gleich wirkende Gegenelemente 20, die beide jeweils ein Reibelement 26, 28 aufweisen, die zum Andrücken gegen einen Bremsbelag 30 eines weiteren Reibelements 32 vorgesehen sind. Der Unterschied der beiden Gegenelemente 20a, 20b besteht darin, dass deren Reibelement 26, 28 gegen die Axialrichtung 34 des Antriebs 8 beziehungsweise Eingangs 10 im Bereich der Bremse 22a unterschiedlich geneigt ist. Während das Reibelement 28 des Gegenelements 20b rechtwinklig zur Axialrichtung 34 ausgerichtet ist, verläuft die Bremsfläche des Reibelements 26 des Gegenelements 20a schräg zur Axialrichtung 34. Im gezeigten Ausführungsbeispiel beträgt der Winkel zwischen der Axialrichtung 34 und der Bremsfläche 45°. Ansonsten sind die beiden Gegenelemente 20 gleich ausgeführt.

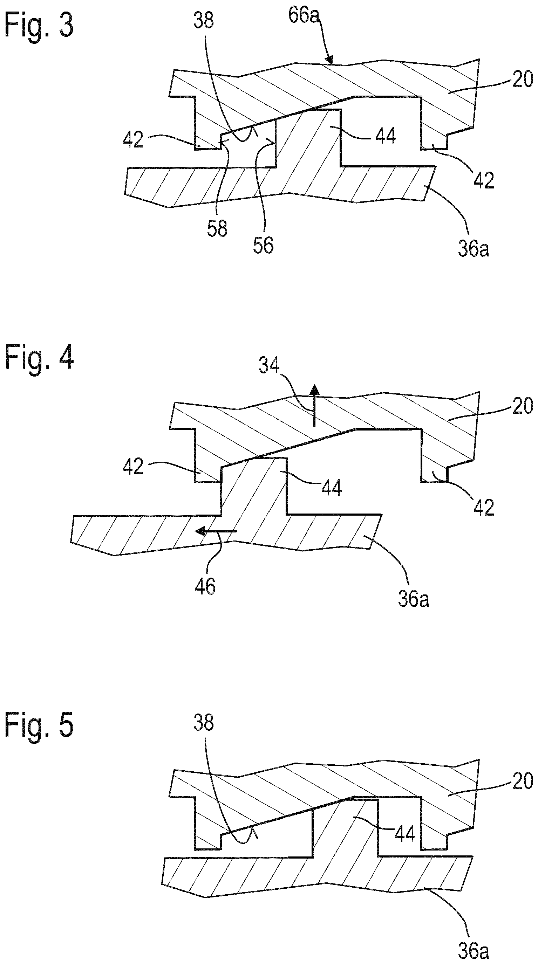

Die Wirkweise der mechanischen Steuereinheit, die die Gegenelemente 20 und einen Abdrücker 36a an der Buchse 16 enthält, ist in den Figuren 3 bis 5 schematisch dargestellt. Ein Gegenelement 20 ist sowohl Gegenstücke zum Abdrücker 36, als auch ein Bremselement, das eine Reibelement 26 trägt.

Die beiden Reibelemente 26, 32 sind sehr exakt zueinander ausgerichtet. Dies wird erreicht, indem das gehäusefeste Reibelement 32 unmittelbar an einer gehäusefesten Baueinheit 37 gelagert ist, die die mit dem Antrieb 8 verbundene Welle 39 lagert. Auf der Welle 39 ist das andere Reibelement 26 unmittelbar gelagert. Das Gerätegehäuse 41 ist ebenfalls an der Baueinheit 37 gelagert.

Das ölgefüllte Getriebegehäuse 24 dient auch als Bremsgehäuse und umschließt die Bremse 22a hermetisch.

Figur 3 zeigt einen Ausschnitt der mechanischen Steuereinheit, nämliche einen Ausschnitt aus einem der Gegenelemente 20, die in dem gezeigten Ausschnitt identisch ausgeführt sind, und einen Ausschnitt aus dem Abdrücker 36a an der Buchse 16. Der Abdrücker 36a kann einstückig mit der Buchse 16 oder als separat daran angebrachtes Element ausgeführt sein. Das Gegenelement 20 weist mehrere Schrägflächen 38 auf, von denen in Figur 3 eine Schrägfläche 38 gezeigt ist. In Figur 2 ist ansatzweise zu erkennen, dass das Gegenelement 20 mehrere kreisförmig um die Achse 40 (Figur 1) verteilte Schrägflächen 38 aufweist, die jeweils durch ein Mitnahmemittel 42 voneinander begrenzt sind. Die Gegenelemente 20 weisen hierdurch jeweils eine Kurvenscheibe mit Steuerflächen auf, die mehrere Schrägflächen 38 aufweisen.

Der Abdrücker 36a ist wiederum mit mehreren Abdrückelementen 44 versehen, wobei jeder Schrägfläche 38 ein Abdrückelement 44 zugeordnet ist. Die Abdrückelemente 44 umfassen jeweils eine zur Schrägfläche 38 parallele Fläche, die zum Entlanggleiten an der Schrägfläche 38 dient.

Wird vom Antrieb 8 ein positives Drehmoment in das Getriebe 2a eingeführt, so wird dieses über die Ratsche 12 auf die Buchse 16 und damit auf den Abdrücker 36a übertragen. Übersteigt das Antriebsmoment den Freigabeschwellwert, so löst sich der Bremsbelag 20 vom Reibelement 26, die Bremse wird gelöst und der Abtrieb 6 kann einer Drehbewegung des Antriebs 8 folgen. Das Lösen der Bremse erfolgt durch das Abdrücken des Gegenelements 20 vom Abdrücker durch eine Drehbewegung der beiden Elemente gegeneinander. Hierbei dient der Abdrücker 36a in Verbindung mit dem Gegenelement 20 beziehungsweise dessen Bremsfläche 38 als Freigabemittel 66a zum Freigeben beziehungsweise Lösen der Bremse 22a bei einem genügenden positiven Antriebsdrehmoment 46.

Die entsprechende Drehbewegung ist in Figur 4 durch eine Bewegung des Abdrückers 36a nach links dargestellt. Der Pfeil am Abdrücker 36a soll hierbei das positive Drehmoment 46 symbolisieren. Das Abdrückelement 44 gleitet an der Schrägfläche 38 entlang und drückt das Gegenelement 20 hierdurch in Axialrichtung 34 vom Abdrücker 36a weg, wie in Figur 4 durch den nach oben weisenden Pfeil angedeutet ist. Hierdurch löst sich das Reibelement 26 beziehungsweise 28 vom Bremsbelag 30 beziehungsweise einem zum Gegenelement 28 zugehörigen nicht dargestellten Bremsbelag, so dass die Bremse 22a gelöst wird.

Zum Erzeugen einer Gegenkraft ist das Getriebe 2a mit einem Federmittel 48 ausgestattet. Diese umfasst mehrere Bremsfedern 50, die jeweils in Federlagern 52 des entsprechenden Gegenelements 20a beziehungsweise 20b gelagert sind. Die Bremsfedern 50 drücken das Gegenelement 20 von einem Tellerrad 54 ab, das - ebenso wie das Gegenelement 20 - frei drehbar auf der Antriebsachse 8 gelagert ist. Allerdings ist das Tellerrad 54 in Axialrichtung 34 fest und unverrückbar im Getriebe 2a abgestützt, so dass die Bremsfedern 50 das Gegenelement 20 in Richtung zum Eingang 10 des Getriebes 2a und somit auf den Bremsbelag 30 des Reibelements 32 drücken. Ohne ein positives Antriebsmoment 46 wird somit die Bremse 22a geschlossen und es wird ein Reibschluss zwischen den Gegenelementen 20 und dem Reibelement 32 über dem Bremsbelag 30 geschaffen.

Um bei einem positiven Drehmoment 46 zu große Kräfte in der Bremse 22a zu vermeiden, ist das Gegenelement 20 jeweils mit den mehreren Mitnahmemitteln 42 ausgestattet. Erreicht das positive Antriebsdrehmoment 46 einen Mitnahmeschwellwert, so stößt das Abdrückelement 44 mit seiner Seitenfläche 56 an eine dem Abdrückelement 44 zugewandte Fläche 58 des Mitnahmemittels 42, wie in Figur 4 dargestellt ist. Es wird ein rutschfreier Kraftfluss im Antriebsstrang durch die Anlage diese beiden Flächen 56, 58 erreicht. Entsprechend wird eine axiale Anpresskraft, mit der der Abdrücker 26 das Gegenelement 20a beziehungsweise 20b in Axialrichtung 34 drückt, nach oben begrenzt.

Bei einem positiven Antriebsdrehmoment 46 unterhalb des Mitnahmeschwellwerts, verläuft der Kraftfluss vom Abdrücker 36a über die Schrägfläche 38 auf das Gegenelement 20. Bei einem Antriebsdrehmoment oberhalb des Mitnahmeschwellwerts erfolgt der Kraftschluss sowohl über die Schrägfläche 38 als auch über die beiden Flächen 56, 58 auf das Gegenelement 20.

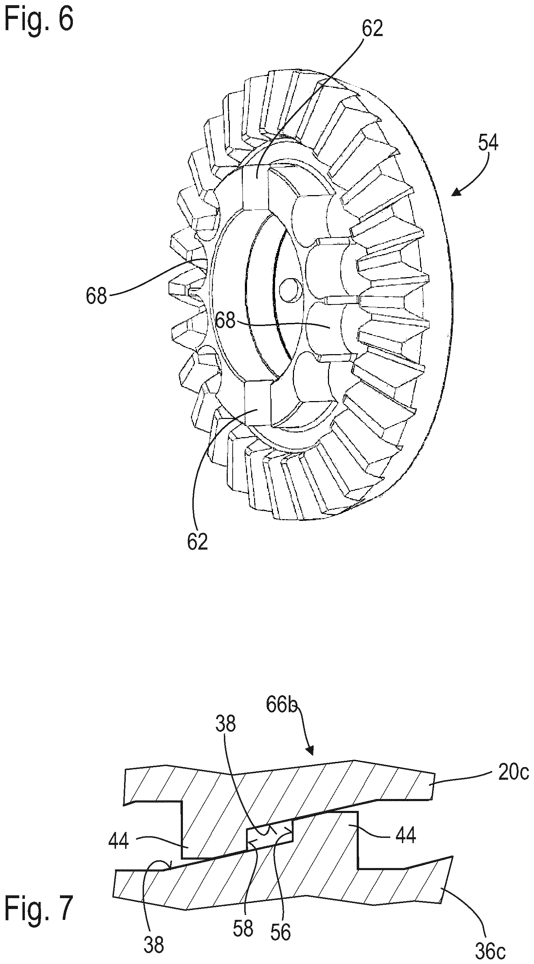

Im weiteren Verlauf geht der Kraftfluss vom Gegenelement 20 auf das Tellerrad 54. Hierzu ist das Gegenelement 20 mit einem Mitnehmer 60 versehen, der in eine Ausnehmung 62, die in Figur 6 dargestellt ist, des Tellerrads 54 eingreift. In Figur 1 ist der Mitnehmer hinter der Welle 8 gelegen und daher nicht sichtbar. Sind zwei gegenüber liegende Mitnehmer 60 vorhanden, so greifen sie ein die beiden Ausnehmungen 62 des Tellerrads ein. Die Verbindung zwischen Bauelement 20 und Tellerrad 54 ist auf diese Weise in Axialrichtung beweglich, so dass sich diese Bauteile 20, 54 gegeneinander verschieben können, um die Bremsung bzw. Freigabebewegung zu ermöglichen. Das Tellerrad 54 kämmt wiederum mit einem Stirnrad 64 des Getriebeausgangs 6, der mit dem Werkzeug 4 verbunden ist.

Bei einem Stillstand des Antriebs 8 und des Werkzeugs 4 ist das Freigabemittel 66 entsprechend der in Figur 3 gezeigten Anordnung positioniert. Die Bremse 22a ist geschlossen und das Reibelement 26 beziehungsweise 28 liegt fest auf dem Bremsbelag 30 auf. Da das gegenüber liegende Reibelement 32 gehäusefest im Getriebe 2a angeordnet ist, wird der Ausgang 6 beziehungsweise das Werkzeug 4 in Ruhe gehalten. Ganz allgemein gesprochen wird das Werkzeug 4 im Stillstand von der Bremse durch Reibschluss in der Bremse 22 in Ruhe gehalten oder blockiert, so dass ein Drehen des Werkzeugs 4 unterbunden wird.

Beginnt nun ein positives Antriebsdrehmoment 46 auf den Antrieb 8 zu wirken, so wird das Abdrückelement 44 entsprechend der Drehmomentrichtung gegen die Schrägfläche 38 gedrückt. In dem in den Figuren 3 bis 5 gezeigten Ausführungsbeispiel wird das Abdrückelement 44 nach links gedrückt. Allerdings drückt das Federmittel 48 die Schrägfläche 38 so fest gegen die parallele Gegenfläche des Abdrückelements 44, dass diese beiden Flächen reibschlüssig und unbeweglich miteinander verbunden bleiben. Erreicht das positive Antriebsdrehmoment einen Freigabeschwellwert, so wird die Grenze dieser Haftreibung erreicht und das Abdrückelement 44 beginnt - bei Überschreiten des Antriebsdrehmoments über den Freigabeschwellwert - an der Schrägfläche 38 entlang zu gleiten. Das Gegenelement 20 wird vom Abdrücker 36a weggedrückt und die Bremse 22a wird gelöst.

Ein beginnendes Drehen des Antriebs 8 ist somit erst bei Erreichen des Freigabeschwellwerts möglich. Die Rotation überträgt sich über die Schrägfläche 38 auf das Gegenelement 20, den Mitnehmer 60, das Tellerrad 54, das Stirnrad 64 auf den Ausgang 6 des Getriebes 2a. Entsprechend wird das Werkzeug 4 in Rotation versetzt. Erreicht das positive Antriebsdrehmoment den Mitnahmeschwellwert, so erreicht die Seitenfläche 56 ihre parallele Gegenfläche 58 des Mitnahmemittels 42 und des wird eine Axialmomentbegrenzung im Getriebe 2a hergestellt.

Wird das positive Antriebsdrehmoment nun wieder verringert, so muss es ein Stück weit unter den Mitnahmeschwellwert sinken, damit sich die beiden Flächen 56, 58 wieder voneinander lösen. Das Abdrückelement 44 gleitet an der Schrägfläche 38 entlang und zwar entgegen der Drehmomentrichtung, so dass sich das Reibelement 26, 28 dem Bremsbelag 30 nähert. Unterschreitet das positive Antriebsdrehmoment einen Bremsschwellwert, so schließt die Bremse 22a und ein Bremsvorgang wird eingeleitet, das Werkzeug 4 wird in seiner Bewegung abgebremst. Ein langes Nachlaufen des Werkzeugs 4 mit einem einhergehenden Sicherheitsrisiko für einen Bediener wird hierdurch vermieden.

Je weiter das positive Antriebsdrehmoment abfällt, desto größer ist die Bremskraft, bis sie bei verschwindendem Antriebsdrehmoment - beziehungsweise einem negativen Antriebsdrehmoment, da eine Gleitreibung des Abdrückelements 44 an der Schrägfläche 38 überwunden werden muss - ihr Maximum erreicht und die Bremse 22a vollständig geschlossen ist. Die Bremskraft wird - unabhängig von einem eventuell negativen Drehmoment - im Wesentlichen durch die Stärke der Bremsfedern 50 und die Neigung der Bremsfläche der Reibelemente 26, 28, 32 bestimmt.

Ein zügiges Abbremsen des Werkzeugs 4 erfolgt also unabhängig von einer Motordrehzahl, vorausgesetzt, das Antriebsdrehmoment bleibt negativ oder unterhalb des Bremsstellwerts. Der Freilauf gibt den Ausgang bei einem negativen Drehmoment des Antriebs 8 oberhalb eines Freilauf-Schwellwerts frei. Da das Tellerrad 54 tangential beweglich auf der Welle 8 gelagert ist, kann ein Verdrehen des Tellerrads 54 relativ zur Welle 8 als Steuergröße zur Steuerung der Bremse verwendet werden. Ebenso wie das Tellerrad 54 ist die mechanische Steuereinheit gegen die Antriebsrichtung tangential beweglich auf der Welle 8 gelagert, wobei die Ratsche die Beweglichkeit in Antriebsrichtung sperrt und für einen Antriebskraftfluss sorgt. Durch die tangential bewegliche Lagerung erlaubt die Steuereinheit jedoch auch in Antriebsrichtung eine tangentiale Beweglichkeit in sich bis zu einer maximalen Steuerverdrehung, die durch das Mitnahmemittel 42 begrenzt wird.

An welcher Stelle das Abdrückelement 44 auf der Schrägfläche 38 bei vollständig geschlossener Bremse 22a angeordnet ist, hängt von der Dicke des Bremsbelags 30 ab. Je weiter der Bremsbelag 30 abnützt, also dünner wird, desto weiter nähert sich das Gegenelement 20 an den Abdrücker 36a an. Dies ist beispielhaft in Figur 5 dargestellt. Der Bremsbelag 30 ist im Wesentlichen verschlissen und das Gegenelement 20 ist fast in seiner nächstmöglichen Position zum Abdrücker 36a angeordnet. Durch die entsprechende Verlängerung der Schrägfläche 38 nach rechts kann somit eine hohe Bremskraft unabhängig vom Zustand des Bremsbelags 30 aufrecht erhalten werden.

Figur 6 zeigt das Tellerrad 54 einer perspektivischen Ansicht. Innerhalb seines Zahnkranzes weist das Tellerrad 54 eine Anzahl von Federlagern 68 auf, in denen die Bremsfedern 50 gelagert sind. Um einen eventuellen Wärmeübertrag vom heißen Mitnehmer 60 auf die Federlager 68 und damit die Bremsfedern 50 gering zu halten, sind die Federlager 68 weiter von der Ausnehmung 62 für den Mitnehmer 60 beabstandet, als sie untereinander beabstandet sind. Um die Temperatur der Bremsfedern 50 auch innerhalb des Gegenelement 20 möglichst gering zu halten, sind die Bremsfedern 50 beziehungsweise deren Federlager 52 möglichst weit vom heiß werdenden Reibelement 26, 26 beabstandet. Der Abstand ist hierbei so eingestellt, dass bei einer maximal zugelassenen Wärmeerzeugung im Getriebe 2a die Temperatur der Federlager 50 100°C nicht übersteigt. Hierdurch kann ein Setzen der Bremsfedern 50 und damit die Abnahme von deren Federkraft entgegengewirkt werden.

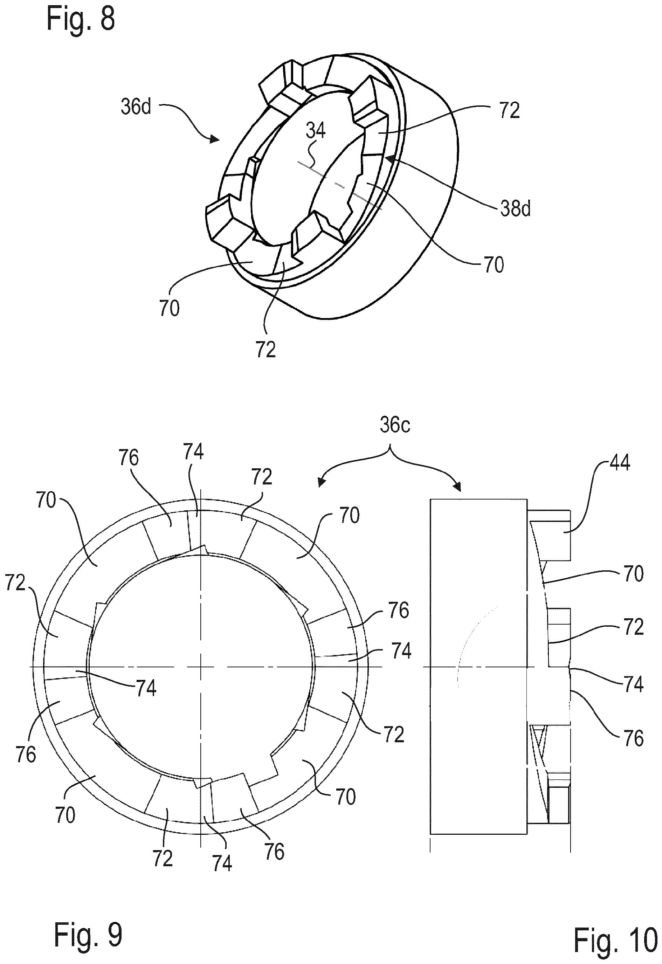

Figur 7 zeigt ein abgewandeltes Freigabemittel 66b mit abgewandeltem Abdrücker 36c und Gegenelement 20c. Die nachfolgende Beschreibung beschränkt sich im Wesentlichen auf die Unterschiede zum Ausführungsbeispiel in den vorhergehenden Figuren, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind. Die Freigabemittel 66a, 66b sind beliebig untereinander austauschbar. Dasselbe gilt für den Abdrücker aus Figur 8, der mit den Abdrückern 36a, 36c austauschbar ist.

Sowohl das Gegenelement 20c als auch der Abdrücker 36c weist eine Kurvenscheibe mit Steuerflächen auf, die einander gegenüber stehend angeordnet sind. Auch das Gegenelement 20c ist mit Abdrückelementen 44 versehen, so dass die Abdrückelemente 44 des Gegenelements 20c auf einer Steuerfläche des Abdrückers 36c gleiten und die Abdrückelemente 44 des Abdrückers 36c auf einer Steuerfläche des Gegenelements 20c gleiten. Jede Steuerfläche ist mit einer Schrägfläche 38 versehen, wobei die Schrägflächen 38 des Gegenelements 20c und die Schrägflächen 38 des Abdrückers 36c identisch ausgeführt sind. Durch das gegenseitige Abdrücken kann ein fein verteilter und symmetrischer Kraftverlauf zwischen Gegenelement 20c und Abdrücker 36c erreicht werden.

Ein alternativer Abdrücker 36d ist in Figur 8 in einer perspektivischen Ansicht dargestellt. Er enthält eine Kurvenscheibe mit vier Steuerflächen, die jeweils eine Schrägfläche 38d mit zwei Segmenten 70, 72 aufweisen. Die untere Schrägfläche 70 ist mit einer Schrägenneigung von 9° und die obere Schrägfläche 72 mit einer Schrägenneigung von 5,5° versehen. Die Neigung oder Schräge bzw. der Winkel der Neigung oder Schräge bezieht sich auf die zur Axialrichtung 34 senkrechte Ebene und ist in Tangentialrichtung zu sehen.

Die Winkelwerte beziehen sich auf einen Abdrücker 36d und ein Gegenelement 20 aus Stahl. Bei Ausführung zumindest einer Gleitfläche auf dem Gegenelement 20 und/oder dem Abdrücker 36d mit einer geringeren Haftreibung als Stahl auf Stahl, z.B. einem Polytetrafluorethylen, kann die obere Schrägfläche 72 mit einer Schrägenneigung von unter 5° versehen sein, insbesondere unter 4°.

Durch die verschiedenen Schrägenneigungen bzw. Winkel ist das Gleichgewichtsmoment, bei dem das Abdrückelement 44 des Gegenelements 20 in Gleichgewicht auf der Schrägfläche 38d liegt, bei beiden Segmenten 70, 72 verschieden. Im Bremszustand liegt das Abdrückelement 44 des Gegenelements 20 auf dem unteren Segment 70. Dort ist das Gleichgewichtsmoment höher, als am oberen Segment 72, so dass der Bremsschwellwert relativ hoch liegt. Erreicht das Abdrückelement 44 das Segment 72, so ist dort das Gleichgewichtsmoment niedriger, so dass das Abdrückelement 44 dort zügig zur Anlagefläche 58 gleitet und dort fest anliegt. Das Gleichgewichtsmoment des unteren Segments 70 ist also höher als der Mitnahmeschwellwert, so dass das Abdrückelement 44 nach Erreichen des oberen Segments 72 stabil an der Anlagefläche 58 anliegt und ein Rattern vermieden wird.

Das Gleichgewichtsmoment des oberen Segments 72 ist zweckmäßigerweise an das Werkzeug 4 eingestellt. Weist dieses einen hohen Arbeitswiderstand auf, so ist das obere Segment zweckmäßigerweise steiler als bei einem Werkzeug 4 mit einem kleineren Arbeitswiderstand. Auf diese Weise kann die Bremse 22 leicht an verschiedene Werkzeuge angepasst werden, ohne dass diese Anpassung durch einen Bediener unerwünschterweise verstellt werden kann. Es können somit mehrere Werkzeuggeräte für verschiedene Werkzeuge 4 mit gleichen Bremsen 22 hergestellt werden, deren oberes Segment 72 jeweils verschieden ist.

Entsprechend der Segmente 70, 72 sind auch die vier Abdrückelemente 44 des Abdrückers 36d mit zwei Auflageflächen 74, 76 versehen, wobei die Auflagefläche 74 mit einer höheren Neigung ausgeführt ist, so dass sie flächig auf dem steileren Segment 70 aufliegt und die Auflagefläche 76 mit einer geringen Neigung ausgeführt ist, so dass sie flächig auf dem flacheren Segment 72 aufliegt.

Der Abdrücker 38d ist in Figur 9 in einer Draufsicht und in Figur 10 in einer Seitenansicht gezeigt. Zu sehen sind die Segmente 70, 72 und die Anlageflächen 74, 76 der Abdrückelemente 44.

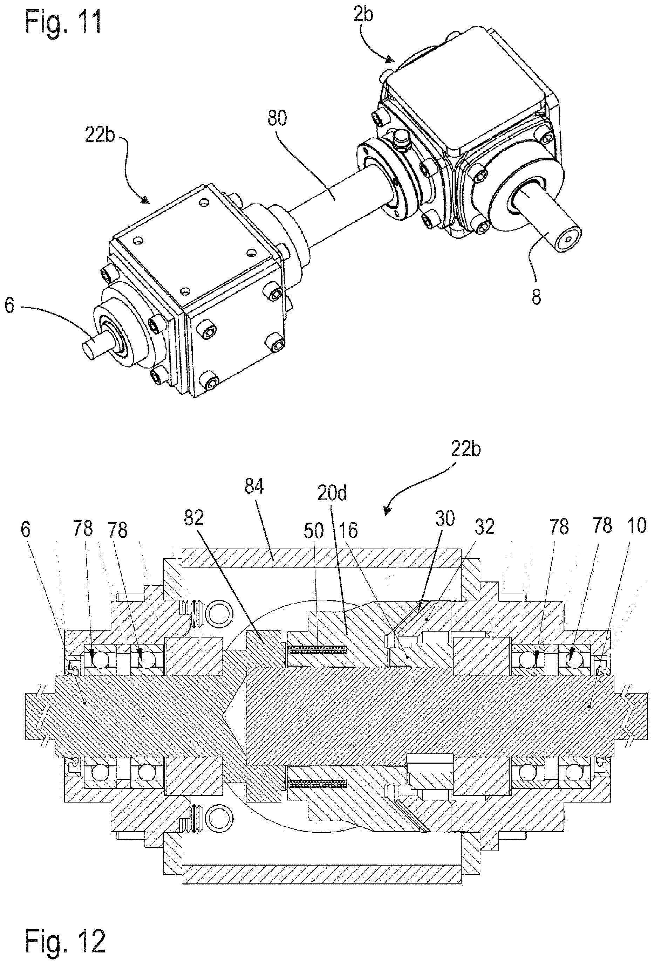

Während Figur 1 die Bremse 22a innerhalb eines Getriebes 2a zeigt, ist die Bremse 22b in Figur 11 separat zum Getriebe 2b ausgeführt. Auch in diesem Ausführungsbeispiel ist das Getriebe 2b ein Winkelgetriebe, wobei es ebenso gut ein Durchgangsgetriebe sein kann. Der Kraftfluss verläuft geradlinig durch die Bremse 22b. Es ist auch möglich, auf ein Getriebe ganz zu verzichten und das Werkzeuggerät mit Bremse und ohne Getriebe herzustellen. Ebenso ist es möglich und vorteilhaft, das Werkzeuggerät mit Bremse und Getriebe herzustellen und auf das Zwischenstück 80 zwischen Bremse 22b und Getriebe 2b zu verzichten, so dass Bremse 22b und Getriebe 2b unmittelbar aneinander grenzen.

Eine Schnittdarstellung durch die Bremse 22b ist in Figur 12 gezeigt. Die Bremse 22b ist analog zur Bremse 22a ausgeführt und enthält einen Eingang 10 bzw. Antrieb 6, Lager 78, das Reibelement 32 mit dem Bremsbelag 30, die Muffe 16 mit dem Abdrücker und das Gegenelement 20d, das von Bremsfedern 50 von einem am Ausgang 6 befestigten Widerlager 80 abgedrückt ist. Auch ohne Getriebe 2a ist die Wirkweise der Bremse 22b identisch zu der Bremse 22a. Das Bremsgehäuse 84 ist hermetisch verschlossen um die Bremse vor Schmutz zu schützen und ölgefüllt um Bremswärme zügig von Wärme erzeugenden Bauteilen abzuführen.

### Bezugszeichenliste

- 2a,b: Getriebe
- 4: Werkzeug
- 6: Ausgang
- 8: Antrieb
- 10: Eingang
- 12: Ratsche
- 14: Freilauf
- 16: Buchse
- 18: Ausnehmung
- 20a-d: Gegenelement
- 22a,b: Bremse
- 24: Getriebegehäuse
- 26: Reibelement
- 28: Reibelement
- 30: Bremsbelag
- 32: Reibelement
- 34: Axialrichtung
- 36a, c, d: Abdrücker
- 37: Baueinheit
- 38a,d: Schrägfläche
- 39: Welle
- 40: Achse
- 41: Gerätegehäuse
- 42: Mitnahmemittel
- 44: Abdrückelement
- 46: Drehmoment
- 48: Federmittel
- 50: Bremsfeder
- 52: Federlager
- 54: Tellerrad
- 56: Seitenfläche
- 58: Fläche
- 60: Mitnehmer
- 62: Ausnehmung
- 64: Stirnrad
- 66: Freigabemittel
- 68: Federlager
- 70: Segment
- 72: Segment
- 74: Anlagefläche
- 76: Anlagefläche
- 78: Lager
- 80: Zwischenstück
- 82: Widerlager
- 84: Bremsgehäuse

## Patentansprüche

1. Werkzeuggerät mit einem Werkzeug (4), einem Antrieb (8) zum Antreiben des Werkzeugs (4), einem Gerätegehäuse (41), einer zum Gerätegehäuse (41) zusätzlichen, gehäusefesten Baueinheit (37), einer mit dem Antrieb (8) verbundenen und in der gehäusefesten Baueinheit (37) gelagerten Welle (39), einer als Reibbremse mit einem gehäusefesten Reibelement (32) ausgeführten Bremse (22a, 22b) zum Abbremsen des Werkzeugs (4), einer mechanischen Steuereinheit zur Steuerung der Bremse (22a, 22b), die als Eingangsgröße das Antriebsdrehmoment verwendet und dazu vorbereitet ist, das Antriebsdrehmoment auf mechanischem Wege in eine die Bremse (22a, 22b) lösende Kraft zu wandeln, und einem Federmittel (48), das dazu vorbereitet ist, dass es die Bremse (22a, 22b) bei einem Absinken des Antriebsdrehmoments unter einen Bremsschwellwert in einen Bremszustand drückt, wobei der Bremsschwellwert bei einem positiven Antriebsdrehmoment liegt und das Reibelement (32) sowohl an der gehäusefesten Baueinheit (37) als auch auf der Welle (39) gelagert ist.

2. Werkzeuggerät nach Anspruch 1,
**dadurch gekennzeichnet, dass** die Bremse (22a, 22b) ein Freigabemittel (66a, 66b) enthält, das dazu vorbereitete ist, die Bremse (22a, 22b) bei einem positiven Antriebsdrehmoment oberhalb eines Freigabeschwellwerts in einen Freigabezustand zu drücken.

3. Werkzeuggerät nach Anspruch 2,
**dadurch gekennzeichnet, dass** das Freigabemittel (66a, 66b) einen Abdrücker (36a, 36c, 36d) und ein Gegenelement (20a-d) mit einer Schrägfläche (38a, 38d) aufweist, die so zueinander angeordnet sind, dass der Abdrücker (36a, 36c, 36d) bei einem ansteigenden positivem Drehmoment an der Schrägfläche (38, 38d) entlang läuft und einen Freigabedruck zum Lösen der Bremse (22a, 22b) aufbaut.

4. Werkzeuggerät nach Anspruch 3,
**dadurch gekennzeichnet, dass** das Gegenelement (20a-d) mit der Schrägfläche (38a, 38d) eine Kurvenscheibe mit mehreren Schrägflächen (38a, 38d) ist, die um eine Drehachse (40) des Antriebs (8) angeordnet sind.

5. Werkzeuggerät nach Anspruch 3 oder 4,
**dadurch gekennzeichnet, dass** der Abdrücker (36d) ebenfalls eine Schrägfläche (38d) aufweist, die am Gegenelement (20d) zum Freigeben der Bremse (22a, 22b) entlang läuft.

6. Werkzeuggerät nach einem der Ansprüche 3 bis 5,
**dadurch gekennzeichnet, dass** die Schrägfläche (38d) zumindest zwei Segmente (70, 72) unterschiedlicher Schrägenneigung aufweist und das obere Segment (72) eine geringere Schrägenneigung aufweist, als das untere Segment (70).

7. Werkzeuggerät nach Anspruch 6,
**dadurch gekennzeichnet, dass** das obere Segment (72) so angeordnet ist, dass die Bremse (22a, 22b) bei einem Rutschen des Abdrückers (36d) auf jedwedem Bereich des oberen Segments (72) geöffnet ist.

8. Werkzeuggerät nach einem der vorhergehenden Ansprüche,
**dadurch gekennzeichnet, dass** die Bremse (22a, 22b) eine Reibbremse mit zwei Reibelementen (26, 28, 32) ist, die jeweils eine Bremsfläche aufweisen, die um einen Winkel zwischen 10° und 80° zu einer Axialrichtung (34) des Antriebs im Bereich der Bremse (22a, 22b) geneigt ist.

9. Werkzeuggerät nach einem der vorhergehenden Ansprüche,
**dadurch gekennzeichnet, dass** die Bremse (22a, 22b) eine Reibbremse mit einem gehäusefesten Reibelement ist, das um einen Kraftfluss vom Antrieb (4) zum Werkzeug (8) angeordnet ist.

10. Werkzeuggerät nach einem der vorhergehenden Ansprüche,
**gekennzeichnet durch** ein Bremsengehäuse, das die Bremse (22a, 22b) umschließt.

11. Werkzeuggerät nach einem der vorhergehenden Ansprüche,
**gekennzeichnet durch** einen Freilauf, dass eine Rotation des Werkzeugs (4) gegenüber dem Antrieb (8) zulässt.

12. Satz aus mehreren Werkzeuggeräten nach einem der vorhergehenden Ansprüche,
**dadurch gekennzeichnet, dass** der Bremsschwellwert der einzelnen Werkzeuggeräte verschieden ist.

13. Getriebeeinheit (2a, 2b) für ein Werkzeuggerät nach einem der vorhergehenden Ansprüche mit einem Getriebeeingang, einem Getriebeausgang und einer zwischen Getriebeeingang und Getriebeausgang angeordneten Bremse (22a, 22b) und einem Getriebegehäuse, das die Bremse (22a, 22b) umschließt.

14. Verfahren zum Abbremsen eines rotierenden Werkzeugs (4) eines Werkzeuggeräts, das ein Gerätegehäuse, eine gehäusefeste Baueinheit und eine als Reibbremse mit einem gehäusefesten Reibelement ausgeführten Bremse (22a, 22b) aufweist, bei dem das Werkzeug (4) von einem Antrieb (8) über eine an der gehäusefesten Baueinheit gelagerte Welle (10) mit positivem Antriebsdrehmoment angetrieben und bei einem Absinken des Antriebsdrehmoments abgebremst wird, wobei eine mechanische Steuereinheit zur Steuerung der Bremse als Eingangsgröße das Antriebsdrehmoment verwendet und das Antriebsdrehmoment auf mechanischem Wege in eine die Bremse lösende Kraft wandelt, und wobei die Bremse (22a, 22b) ein Federmittel (48) enthält, das die Bremse (22a, 22b) bei einem Absinken des Antriebsdrehmoments unter einen Bremsschwellwert selbsttätig in einen Bremszustand drückt, wobei der Bremsschwellwert bei einem positiven Antriebsdrehmoment liegt und das Reibelement (32) sowohl an der gehäusefesten Baueinheit (37) als auch auf der Welle (39) gelagert ist.

## Claims

1. Tool device with a tool (4), a drive (8) for driving the tool (4), a device housing (41), a structural unit (37) additional to the device housing (41) and integral with the housing, a shaft (39) connected with the drive (8) and mounted in the structural unit (37) that is integral with the housing, a brake (22a, 22b) designed as a friction brake with a friction element (32) that is integral with the housing for braking the tool (4), a mechanical control unit for controlling the brake (22a, 22b) that uses the drive torque as input variable and that is prepared to mechanically convert the drive torque into a force releasing the brake (22a, 22b) and a spring means (48) that is prepared to push the brake (22a, 22b) into a braking condition when the drive torque drops under a brake threshold value, wherein the brake threshold value exists for a positive driving torque and the friction element (32) is mounted on the structural unit (37) that is integral with the housing as well as on the shaft (39).

2. Tool device according to claim 1, **characterized in that** the brake (22a, 22b) contains a release means (66a, 66b) that is prepared to push the brake (22a, 22b) into a release condition when the positive drive torque is situated above a release threshold value.

3. Tool device according to claim 2, **characterized in that** the release means (66a, 66b) has a pressing mechanism (36a, 36c, 36d) and a counter member (20a-d) with an inclined surface (38a, 38d) that are arranged relative to each other so that the pressing mechanism (36a, 36c, 36d) runs along the inclined surface (38, 38d), when the positive driving torque is increasing and builds up a release pressure for releasing the brake (22a, 22b).

4. Tool device according to claim 3, **characterized in that** the counter member (20a-d) with the inclined surface (38a, 38d) is a cam disc with several inclined surfaces (38a, 38d) that are arranged about an axis of rotation (40) of the drive (8).

5. Tool device according to claim 3 or 4, **characterized in that** the pressing mechanism (36d) has also an inclined surface (38d) that runs along the counter member (20d) for releasing the brake (22a, 22b).

6. Tool device according to one of the claims 3 to 5, **characterized in that** the inclined surface (38d) has at least two segments (70, 72) with a different inclination and the upper segment (72) has a lower inclination than the lower segment (70).

7. Tool device according to claim 6, **characterized in that** the upper segment (72) is arranged in such a manner that the brake (22a, 22b) is opened when the pressing mechanism (36d) slides down on any portion of the upper segment (72).

8. Tool device according to one of the preceding claims, **characterized in that** the brake (22a, 22b) is a friction brake with two friction elements (26, 28, 32) that have a braking surface each that is inclined about an angle between 10° and 80° to an axial direction (34) of the drive in the area of the brake (22a, 22b).

9. Tool device according to one of the preceding claims, **characterized in that** the brake (22a, 22b) is a friction brake with a friction element, that is integral with the housing, which is arranged about a force flow of the drive (4) to the tool (8).

10. Tool device according to one of the preceding claims, **characterized by** a brake housing that encloses the brake (22a, 22b).

11. Tool device according to one of the preceding claims, **characterized by** a freewheel that allows a rotation of the tool (4) with respect to the drive (8).

12. Set of several tool devices according to one of the preceding claims, **characterized in that** the brake threshold value of the single tool devices is different.

13. Gearbox unit (2a, 2b) for a tool device according to one of the preceding claims with a gearbox input, a gearbox output and a brake (22a, 22b) arranged between the gearbox input and the gearbox output and a gearbox housing that encloses the brake (22a, 22b).

14. Method for braking a rotating tool (4) of a tool device that has a device housing, a structural unit integral with the housing and a brake (22a, 22b) designed as a friction brake with a friction element that is integral with the housing, for which the tool (4) is driven by a drive (8) by a shaft (10) positioned on the structural unit that is integral with the housing with a positive driving torque, and that is slowed down in case of a decreasing driving torque, wherein a mechanical control unit uses the driving torque as an input variable for controlling the brake and mechanically converts the driving torque into a force that releases the brake and wherein the brake (22a, 22b) contains a spring means (48) that automatically pushes the brake (22a, 22b) into a braking condition when the driving torque falls under a brake threshold value, wherein the brake threshold value exists for a positive driving torque and the friction element (32) is mounted on the structural unit (37) that is integral with the housing as well as on the shaft (39).

## Revendications

1. Appareil outil avec un outil (4), un entraînement (8) pour entraîner l'outil (4), un boîtier d'appareil (41), une unité modulaire (37) solidaire du boîtier, en supplément du boîtier d'appareil (41), un arbre (39) relié à l'entraînement (8) et monté dans l'unité modulaire (37) solidaire du boîtier, un frein (22a, 22b) conçu comme un frein à friction avec un élément de friction (32) solidaire du boîtier pour freiner l'outil (4), une unité de commande mécanique pour la commande du frein (22a, 22b) qui utilise le couple d'entraînement comme valeur d'entrée et qui est préparée à transformer le couple d'entraînement par voie mécanique en une force qui déclenche le frein (22a, 22b), et un moyen à ressort (48) qui est préparé à appuyer le frein (22a, 22b) dans un état de freinage lors d'une diminution du couple d'entraînement en dessous d'une valeur seuil du frein, cependant que la valeur seuil du frein se trouve pour un couple d'entraînement positif et l'élément de friction (32) est monté aussi bien sur l'unité modulaire (37) solidaire du boîtier que sur l'arbre (39).

2. Appareil outil selon la revendication 1, **caractérisé en ce que** le frein (22a, 22b) contient un moyen de libération (66a, 66b) qui est préparé à appuyer le frein (22a, 22b) dans un état de libération lors d'un couple d'entraînement positif au-dessus d'une valeur seuil de libération.

3. Appareil outil selon la revendication 2, **caractérisé en ce que** le moyen de libération (66a, 66b) présente un mécanisme de pression (36a, 36c, 36d) et un élément antagoniste (20a-d) avec une surface inclinée (38a, 38d) qui sont placés l'un par rapport à l'autre de telle manière que le mécanisme de pression (36a, 36c, 36d), lors d'un couple positif croissant, se déplace sur la surface inclinée (38, 38d) et établit une pression de libération pour desserrer le frein (22a, 22b).

4. Appareil outil selon la revendication 3, **caractérisé en ce que** l'élément antagoniste (20a-d) avec la surface inclinée (38a, 38d) est une came avec plusieurs surfaces inclinées (38a, 38d) qui sont placées autour d'un axe de rotation (40) de l'entraînement (8).

5. Appareil outil selon la revendication 3 ou 4, **caractérisé en ce que** le mécanisme de pression (36d) présente aussi une surface inclinée (38d) qui se déplace sur l'élément antagoniste (20d) pour relâcher le frein (22a, 22b).

6. Appareil outil selon l'une des revendications 3 à 5, **caractérisé en ce que** la surface inclinée (38d) présente au moins deux segments (70, 72) de différente inclinaison et que le segment supérieur (72) présente une inclinaison plus faible que le segment inférieur (70).

7. Appareil outil selon la revendication 6, **caractérisé en ce que** le segment supérieur (72) est placé de telle manière que le frein (22a, 22b) est ouvert lors d'un glissement du mécanisme de pression (36d) sur n'importe quelle zone du segment supérieur (72).

8. Appareil outil selon l'une des revendications précédentes, **caractérisé en ce que** le frein (22a, 22b) est un frein à friction avec deux éléments de friction (26, 28, 32) qui présentent chacun une surface de freinage qui est inclinée selon un angle entre 10° et 80° par rapport à un sens axial (34) de l'entraînement dans la zone du frein (22a, 22b).

9. Appareil outil selon l'une des revendications précédentes, **caractérisé en ce que** le frein (22a, 22b) est un frein à friction avec un élément de friction solidaire du boîtier qui est placé autour d'un flux de force de l'entraînement (4) vers l'outil (8).

10. Appareil outil selon l'une des revendications précédentes, **caractérisé par** un boîtier de frein qui renferme le frein (22a, 22b).

11. Appareil outil selon l'une des revendications précédentes, **caractérisé par** une roue libre qui permet une rotation de l'outil (4) par rapport à l'entraînement (8).

12. Jeu de plusieurs appareils outils selon l'une des revendications précédentes, **caractérisé en ce que** la valeur seuil du frein des différents appareils outils est différente.

13. Unité de transmission (2a, 2b) pour un appareil outil selon l'une des revendications précédentes avec une entrée de transmission, une sortie de transmission et un frein (22a, 22b) placé entre l'entrée de transmission et la sortie de transmission et un carter d'engrenage qui renferme le frein (22a, 22b).

14. Procédé pour freiner un outil rotatif (4) d'un appareil outil qui présente un boîtier d'appareil, une unité modulaire solidaire du boîtier, un frein (22a, 22b) conçu comme un frein à friction avec un élément de friction solidaire du boîtier pour lequel l'outil (4) est entraîné par un entraînement (8) par un arbre (10) monté sur l'unité modulaire solidaire du boîtier avec un couple d'entraînement positif et est freiné lors d'une diminution du couple d'entraînement, cependant qu'une unité de commande mécanique pour la commande du frein utilise le couple d'entraînement comme valeur d'entrée et transforme le couple d'entraînement par voie mécanique en une force qui déclenche le frein et cependant que le frein (22a, 22b) contient un moyen à ressort (48) qui appuie automatiquement le frein (22a, 22b) dans un état de freinage lors d'une diminution du couple d'entraînement en dessous d'une valeur seuil du frein, cependant que la valeur seuil du frein se trouve pour un couple d'entraînement positif et l'élément de friction (32) est monté aussi bien sur l'unité modulaire (37) solidaire du boîtier que sur l'arbre (39).
